# EUROPÄISCHE PATENTSCHRIFT

(11) **EP 1 415 102 B1**
(45) Veröffentlichungstag und Bekanntmachung des Hinweises auf die Patenterteilung: **26.07.2006**
(21) Anmeldenummer: 02794566.6
(22) Anmeldetag: 07.08.2002
(51) Int. Cl.: F16K 1/34, F16K 47/12, F02M 61/16

(54) **SCHLIESSKÖRPER, INSBESONDERE VENTILKEGEL FÜR EIN STETIGDRUCKVENTIL**
CLOSURE ELEMENT, ESPECIALLY A VALVE CONE FOR A CONTINUOUS PRESSURE VALVE
ELEMENT DE FERMETURE, EN PARTICULIER CONE DE SOUPAPE POUR SOUPAPE A PRESSION CONSTANTE

(30) Priorität: 10.08.2001 DE 10139534
(43) Veröffentlichungstag der Anmeldung: 06.05.2004
(73) Patentinhaber: Bosch Rexroth Aktiengesellschaft, 97816 Lohr am Main (DE)
(72) Erfinder: BACHMANN, Peter, 63879 Weibersbrunn (DE); KÜNZINGER, Uwe, 97854 Steinfeld-Waldzell (DE); MÜHLHOFF, Holger, 63768 Hösbach (DE); NEUMANN, Axel, 97816 Lohr (DE); RIES, Hans-Peter, 97816 Lohr-Halsbach (DE); RÜFER, Thomas, 97816 Lohr (DE); WÖLFGES, Hans, 97816 Lohr (DE)
(86) Internationale Anmeldenummer: PCT/EP2002/008801
(87) Internationale Veröffentlichungsnummer: WO 2003/014606

(56) Entgegenhaltungen:
- EP-A- 0 810 048
- DE-A- 19 829 880
- US-A- 4 899 699
- US-A- 4 909 439
- US-A- 5 072 885
- US-A- 5 785 257
- PATENT ABSTRACTS OF JAPAN vol. 1998, no. 10, 31. August 1998 (1998-08-31) & JP 10 141183 A (ISUZU MOTORS LTD), 26. Mai 1998 (1998-05-26)
- PATENT ABSTRACTS OF JAPAN vol. 2000, no. 01, 31. Januar 2000 (2000-01-31) & JP 11 294304 A (UNISIA JECS CORP), 26. Oktober 1999 (1999-10-26)

## Beschreibung

Die Erfindung betrifft einen Schließkörper, insbesondere einen Ventilkegel für ein Stetigdruckventil, zur Steuerung von fluidischem Druckmittel, mit einem Dichtabschnitt und mit einem Führungsabschnitt, der ein Überströmen von Druckmittel zwischen den beiden Seiten des Schließkörpers ermöglicht.

Ein derartiger, als Ventilkegel ausgebildeter Schließkörper ist aus der DE 199 07 732 A1 bekannt. Der Ventilkegel ist in einer Bohrung eines direkt betätigten hydraulischen Proportional-Druckbegrenzungsventils axial verschiebbar gelagert. Er weist einen kegelförmig ausgebildeten Dichtabschnitt und einen Führungsabschnitt auf. Die Spitze des Dichtabschnitts wirkt mit einer Sitzbohrung zusammen. Zwischen der Austrittsöffnung der Sitzbohrung und dem kegelförmig ausgebildeten Dichtabschnitt ist ein den Druckmittelstrom steuernder Drosselspalt ausgebildet, dessen Größe von der Position des Ventilkegels abhängt. Der Führungsabschnitt weist zwei den Ventilkegel führende Teilbereiche auf, zwischen denen ein weiterer Abschnitt mit geringerem Durchmesser angeordnet ist. Die zur Führung dienenden zylinderförmigen Teilbereiche sind mit mehreren gleichmäßig über den Umfang verteilten Abflachungen versehen, die ein Überströmen von Druckmittel zwischen den beiden Seiten des Ventilkegels erlauben. Die Abflachungen ermöglichen einen Druckausgleich zwischen den beiden Seiten des Ventilkegels, so daß von beiden Seiten derselbe Druck auf den Ventilkegel wirkt. Ausgangsmaterial für die Fertigung eines Ventilkegels mit Überströmabflachungen in Teilbereichen des Führungsabschnitts ist entweder Rundmaterial, das bei der Bearbeitung mit Abflachungen versehen wird, oder Material mit quadratischem Querschnitt, dessen Kanten bei der Bearbeitung so verrundet werden, daß der Außendurchmesser der zur Führung dienenden Teilbereiche dem Innendurchmesser der Ventilkegelbohrung entspricht. Beide Fertigungsvarianten sind sehr kostenaufwendig. Bei der Verwendung von Rundmaterial müssen die Ventilkegel wegen der Überströmabflachungen-für einzelne Schleifvorgänge eingespannt werden, entweder um den in einem vorangegangenen Arbeitsgang spitzenlos geschliffenen Dicht- und Führungsabschnitt im Bereich des Führungsabschnitts nachträglich mit Abflachungen zu versehen oder um den Führungsabschnitt des bereits mit Abflachungen versehenen Ventilkegels und den Dichtabschnitt in zwei getrennten Arbeitsgängen zu schleifen, da wegen der Abflachungen ein gleichzeitiges spitzenloses Schleifen von Führungs- und Dichtabschnitt nicht möglich ist. Bei der Verwendung von Material mit quadratischem Querschnitt ist ein Drehvorgang mit unterbrochenem Schnitt erforderlich, um die rotationssymmetrischen Bereiche herzustellen. Um den Ventilkegel am Dichtabschnitt und am Führungsabschnitt mit kleiner Koaxialitätstoleranz zu fertigen, müssen die beiden Abschnitte zwischen Spitzen geschliffen werden. Direkt an der Berührungsfläche zwischen dem Ventilkegel und einem mit diesem zusammenwirkenden Stößel ist jedoch keine Zentrierbohrung zum Schleifen zwischen Spitzen zulässig. Somit muß auf dieser Seite ein zapfenförmiger Ansatz mit einer Zentrierbohrung vorgesehen werden, der nach dem Schleifen um die Länge der Zentrierbohrung zu kürzen ist.

Ein derartiger, als Ventilkegel ausgebildetet Schließkörper ist ebenfalls aus der US 4909439 bekannt.

Der Erfindung liegt die Aufgabe zugrunde, einen Schließkörper der eingangs genannten Art zu schaffen, der sich kostengünstig herstellen läßt.

Diese Aufgabe wird durch die im Anspruch 1 gekennzeichneten Merkmale gelöst. Die erfindungsgemäße Formgebung des Schließkörpers erlaubt es, den gehärteten Schließkörper mit kleiner Koaxialitätstoleranz ohne Zentrierbohrungen an Dicht- und Führungsabschnitt in einem Arbeitsgang spitzenlos zu schleifen. Obwohl die Nuten die Oberfläche des Schließkörpers unterbrechen, ist der Schließkörper aufgrund der wendelförmigen Anordnung der Nuten immer auf einer für das spitzenlose Schleifen ausreichenden Länge am Führungsabschnitt in der Schleifeinrichtung geführt. Dies bedeutet, daß der Schließkörper vor dem Härten durch spangebende Bearbeitung hergestellt und nach dem Härten mit einem Arbeitsgang an Dichtabschnitt und Führungsabschnitt spitzenlos fertig geschliffen werden kann.

Vorteilhafte Weiterbildungen der Erfindung sind in den Unteransprüchen gekennzeichnet. Die Unteransprüche betreffen die Anzahl und die Anordnung der wendelförmigen Nuten und die Ausgestaltung des Führungsabschnitts. Weitere Ansprüche sind auf die Herstellung und die Verwendung eines erfindungsgemäßen Ventilkegels gerichtet.

Die Erfindung wird im Folgenden mit ihren weiteren Einzelheiten anhand von in den Zeichnungen dargestellten Ausführungsbeispielen näher erläutert. Es zeigen
- Figur 1: als Beispiel, um das Verständnis der Erfindung zu erleichtern, einen als Ventilkegel ausgebildeten ersten Schließkörper, der in einer Bohrung eines Gehäuses eines hydraulischen Ventils geführt ist,
- Figur 2: einen zweiten als Ventilkegel ausgebildeten Schließkörper und
- Figur 3: als Beispiel, um das Verständnis der Erfindung zu erleichtern, einen weiteren als Ventilkegel ausgebildeten Schließkörper.

Gleiche Teile sind mit den gleichen Bezugszahlen versehen.

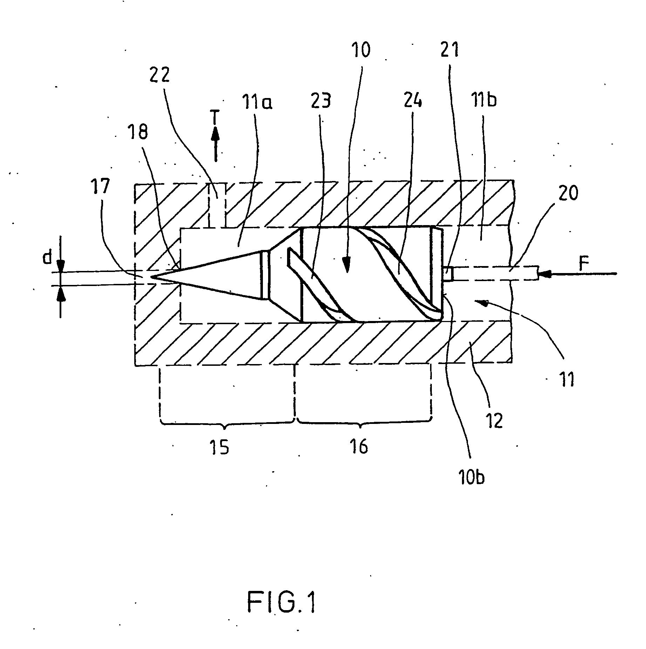

Die Figur 1 zeigt einen ersten Schließkörper in der Form eines Ventilkegels 10, der in einer Bohrung 11 eines nur schematisch dargestellten Gehäuses 12 eines hydraulischen Ventils geführt ist. Der Ventilkegel 10 unterteilt die Bohrung 11 in zwei Bereiche 11a und 11b. Der Ventilkegel 10 besitzt einen kegelförmig ausgebildeten Dichtabschnitt 15 sowie einen zylinderförmig ausgebildeten Führungsabschnitt 16. Die Spitze des kegelförmig ausgebildeten Dichtabschnitts 15 ragt in eine Bohrung 17 des Ventils 12, über die die Druckmittelzufuhr zu dem Ventil 12 erfolgt. Die Austrittsöffnung der Bohrung 17 ist als Ventilsitz 18 ausgebildet. Zwischen dem Ventilsitz 18 und dem kegelförmig ausgebildeten Dichtabschnitt 15 des Ventilkegels 10 ist ein den Druckmittelstrom steuernder Drosselspalt ausgebildet. Die Größe des Drosserspalts ist durch den Abstand des Ventilkegels 10 von dem Ventilsitz 18 bestimmt. Das Druckmittel übt auf den Ventilkegel 10 eine Kraft aus, die gleich dem Produkt aus dem Druck des Druckmittels in der Bohrung 17 und der Querschnittsfläche des Ventilsitzes 18 ist. Die Querschnittsfläche des Ventilsitzes 18 ist durch den Durchmesser d der Bohrung 17 bestimmt. Auf die entgegengesetzte, mit dem Bezugszeichen 10b versehene Seite des Ventilkegels 10 wirkt über einen Stößel 20 die mit F bezeichnete Kraft eines in der Figur 1 nicht dargestellten Elektromagneten. Der Stößel 20 greift an einem zapfenförmigen Ansatz 21 des Ventilkegels 10 an, dessen Durchmesser gleich dem Durchmesser des Stößels 20 ist. Der Ansatz 21 verhindert, daß sich der Stößel in die Stirnfläche des Ventilkegels 10 einarbeitet. Ein Einarbeiten des Stößels 20 in die Stirnfläche des Ventilkegels 10 würde sich nachteilig auf seine Führung in der Bohrung 11 auswirken. Über eine weitere Bohrung 22 wird Druckmittel aus dem Bereich 11a zu einem in der Figur 1 nicht dargestellten Tank T abgeführt. Der Druck in dem Bereich 11a ist praktisch gleich dem Tankdruck.

Der Außendurchmesser des Führungsabschnitts 16 und der Innendurchmesser der Bohrung 11 sind so aufeinander abgestimmt, daß sich der Ventilkegel 10 mit geringem radialen Spiel in der Bohrung 11 axial verschieben läßt. Der Führungsabschnitt 16 des Ventilkegels 10 ist an seiner Oberseite mit zwei wendelförmig ausgebildeten Nuten 23 und 24 versehen. Die Nuten 23 und 24 bilden Kanäle, die die beiden Seiten des Ventilkegels 10 miteinander verbinden. Sie erlauben ein Überströmen von Druckmittel aus dem Bereich 11a in den Bereich 11b und in der entgegengesetzten Richtung. Die Nuten 23 und 24 ermöglichen einen Druckausgleich zwischen den Bereichen 11a und 11b, so daß in dem Bereich 11b derselbe Druck auf den Ventilkegel 10 wirkt wie in dem Bereich 11a. Die Nuten 23 und 24 besitzen dieselbe Steigung und Breite. Sie sind um 180° gegeneinander versetzt. Da der Druck des Druckmittels in den beiden Nuten gleich groß ist, heben sich Kräfte, die von dem Druckmittel im Führungsabschnitt 16 in radialer Richtung auf den Ventilkörper 10 ausgeübt werden, gegeneinander auf. Durch diese Maßnahme wird der Ventilkegel 10 in der Bohrung 11 zentriert. Die Anzahl der wendelförmigen Nuten ist nicht auf zwei beschränkt. Wird der Führungsabschnitt des Ventilkegels 10 mit n wendelförmigen Nuten versehen, wobei n eine ganze Zahl ist, sind die Nuten jeweils um 360°/n gegeneinander-versetzt. Diese Maßnahme bewirkt, daß sich die von dem Druckmittel im Führungsabschnitt 16 in radialer Richtung auf den Ventilkegel 10 ausgeübten Kräfte gegenseitig aufheben. Die axiale Lage des Ventilkörpers 10 stellt sich so ein, daß sich die auf den Ventilkörper 10 wirkenden Kräfte gegenseitig aufheben. Da die auf die Spitze des Dichtabschnitts 15 wirkende Kraft proportional zu dem Druck in der Bohrung 17 ist, stellt sich der Druck in der Bohrung 17 entsprechend der durch den Elektromagneten auf den Ventilkegel 10 ausgeübten Kraft F ein.

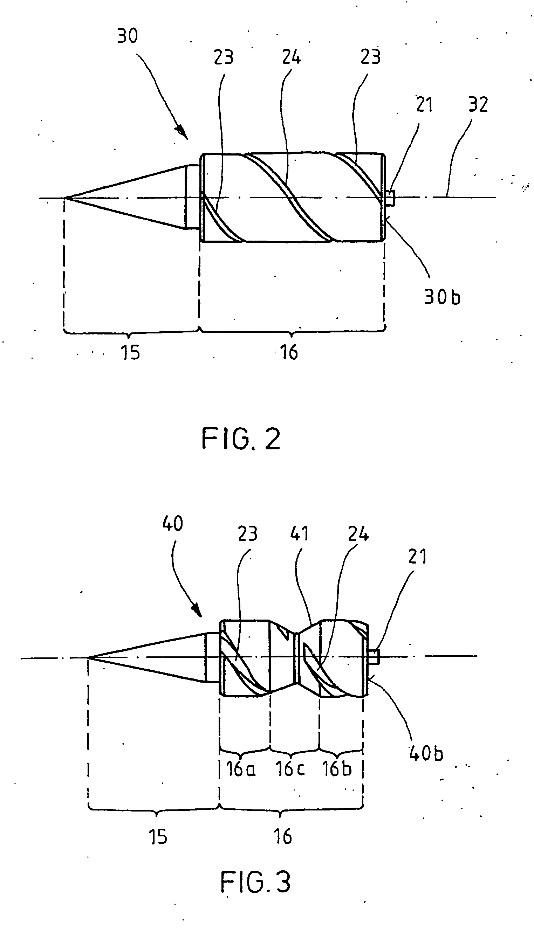

Die Figur 2 zeigt einen erfindungsgemäß ausgestalteten Ventilkegel 30. Der Dichtabschnitt und der Führungsabschnitt des Ventilkegels 30 sind - wie in der Figur 1 - mit den Bezugszeichen 15 bzw. 16 versehen. Die mit dem zapfenförmigen Ansatz 21 versehene Stirnseite des Ventilkegels 30 ist mit 30b bezeichnet. Der Führungsabschnitt 16 ist mit zwei Nuten 23 und 24 versehen, die wendelförmig von der einen Seite des Führungsabschnitts 16 zu dessen anderer Seite verlaufen. Die Nuten sind um 180° gegeneinander versetzt. Die Steigung der Nuten 23 und 24 ist so gewählt, daß zwischen ihrem Anfang und ihrem Ende kein Winkelversatz-bezogen auf die mit 32 bezeichnete Mittelachse des Ventilkegels 30 besteht. Das bedeutet, daß Anfang und Ende jeder Nut auf einer Linie liegen, die in der Richtung der Mittelachse 32 des Ventilkegels 30 verläuft. Damit ist gewährleistet, daß die Summe der beim Schleifen an der Schleifscheibe anliegenden Bereiche eines Ventilkegels unabhängig von der Winkellage gleich groß ist. Hierdurch ergibt sich beim spitzenlosen Schleifen des Ventilkegels ein konstanter Schleifdruck.

Die Figur 3 zeigt einen dritten Ventilkegel 40. Mit dem Bezugszeichen 40b ist die mit dem zapfenförmigen Ansatz 21 versehene Stirnseite des Ventilkegels 40 versehen. Der Dichtabschnitt und der Führungsabschnitt des Ventilkegels 40 sind - wie in der Figur 1 - mit den Bezugszeichen 15 bzw. 16 versehen. Der Führungsabschnitt 16 ist in drei Teilabschnitte 16a, 16b, 16c unterteilt, von denen.die Teilabschnitte 16a und 16b zur Führung des Ventilkegels 40 dienen. Der Teilabschnitt 16c ist als Ringnut 41 mit keilförmigem Querschnitt ausgebildet. Die Ringnut 41 verringert die Flächen, mit denen der Ventilkegel 40 die. Innenfläche der Bohrung 11 berührt. Diese Maßnahme verringert sowohl die Reibungskräfte zwischen dem Ventilkegel 40 und der Bohrung 11 als auch den Strömungswiderstand der Nuten 23 und 24.

Die.Herstellung eines Schließkörpers gemäß der Erfindung erfolgt in der nachstehend beschriebenen Reihenfolge:
- Fertigen des Dichtabschnitts 15 und des Führungsabschnitts 16 sowie gegebenenfalls der Unterbrechung 41 des Führungsabschnitts 16 und des zapfenförmigen Ansatzes 21 als Drehteil aus ungehärtetem stangenförmigen Rundmaterial mit Schleifzugabe,
- Fertigen der wendelförmigen Nuten 23 und 24 durch Zirkularfräsen in derselben Einspannung wie beim Drehen,
- Härten,
- spitzenloses Schleifen des Dichtabschnitts 15 und des Führungsabschnitts 16 des gehärteten Schließkörpers.
Die Erfindung erleichtert insbesondere die Fertigung von aus Stahl hergestellten Schließkörpern.

## Patentansprüche

1. Schließkörper, insbesondere Ventilkegel für ein Stetigdruckvehtil, zur Steuerung von fluidischem Druckmittel mit einem Dichtabschnitt und mit einem zylinderförmig ausgebildeten Führungsabschnitt, der ein Überströmen von Druckmittel zwischen den beiden Seiten des Schließkörpers ermöglicht, wobei die Oberfläche des Führungsabschnitts mit mindestens einer wendelförmigen Nut versehen ist, die von der einen Seite des Führungsabschnitts zu dessen anderer Seite führt, **dadurch gekennzeichnet, daß** die Steigung der wendelförmigen Nut (23, 24) so gewählt ist, daß Anfang und Ende jeder Nut auf einer Linie liegen, die in der Richtung der Mittelachse (32) des Ventilkegels (30) verläuft.

2. Schließkörper nach Anspruch 1, **dadurch, gekennzeichnet, daß** der Führungsabschnitt (16) mit zwei Nuten (23, 24) versehen ist, die um 180° gegeneinander versetzt sind.

3. Schließkörper nach Anspruch 1, **dadurch gekennzeichnet, daß** der Führungsabschnitt (16) mit n Nuten versehen ist, die um 360°/n gegeneinander versetzt sind, wobei n eine ganze Zahl its, die größer als zwei ist.

4. Schließkörper nach einem der vorhergehenden Ansprüche, **dadurch gekennzeichnet, daß** der Führungsabschnitt (16) mit einer Unterbrechung (16c) versehen ist.

5. Schließkörper nach Anspruch 4, **dadurch gekennzeichnet, daß** die Unterbrechung (16c) des Führungsabschnitts (16) in der Art einer Ringnut (41) ausgebildet ist.

6. Schließkörper nach einem der vorhergehenden Ansprüche, **dadurch gekennzeichnet, daß** der Schließkörper (10; 30; 40) auf der dem Führungsabschnitt (16) zugewandten Stirnseite (10b; 30b; 40b) mit einem zapfenförmigen Ansatz (21) versehen ist.

7. Herstellung eines Schließkörpers nach einem der vorhergehenden Ansprüche durch die folgenderi Schritte:
- Fertigen des Dichtabschnitts und des Führungsabschnitts sowie gegebenenfalls der Unterbrechung des Führungsabschnitts und des zapfenförmigen Ansatzes als Drehteil mit Schleifzugabe,
- Fertigen der wendelförmigen Nuten durch Zirkularfräsen;
- Härten,
- spitzenloses Schleifen.

8. Anordnung eines Schließkörpers nach einem der vorhergehenden Ansprüche in einer Führungsbohrung (11) eines Gehäuses (12) eines Stetigdruckventils.

## Claims

1. A closing element, in particular a valve cone for a continuous pressure valve, for controlling fluidic pressure medium, having a sealing section and a cylindrical guide section which allow an overflow of pressure medium between the two sides of the closing element, the surface of the guide section being provided with at least one helical groove which leads from the one side of the guide section to its other side, **characterized by the fact that** the pitch of the helical groove (23, 24) is selected such that the start and end of each groove lie on a line which runs in the direction of the centre axis (32) of the valve cone (30).

2. A closing element according to claim 1, **characterized by the fact that** the guide section (16) is provided with two grooves (23, 24) which are offset from one another by 180°.

3. A closing element according to claim 1, **characterized by the fact that** the guide section (16) is provided with n grooves which are offset from one another by 360°/n, n being an integral number which is greater than two.

4. A closing element according to any of the preceding claims, **characterized by the fact that** the guide section (16) is provided with an interruption (16c).

5. A closing element according to claim 4, **characterized by the fact that** the interruption (16c) of the guide section (16) is formed like an annular groove (41).

6. A closing element according to any of the preceding claims, **characterized by the fact** that the closing element (10; 30; 40) is provided with a peg-shaped extension (21) on the end face (10b; 30b; 40b) facing the guide section (16).

7. The production of a closing element according to any of the preceding claims by means of the following steps:
- production of the sealing section and of the guide section and if need be of the interruption in the guide section and of the peg-shaped extension as a turned part with grinding allowance,
- production of the helical grooves by circular milling,
- hardening,
- centreless grinding.

8. An arrangement of a closing element according to any of the preceding claims in a guide bore (11) of a housing (12) of a continuous pressure valve.

## Revendications

1. Un élément de fermeture, en particulier un cône de valve pour une valve de pression à réglage progressif, dédié à la commande d'un fluide de pression, doté d'un segment d'étanchéité et doté d'un segment de guidage de forme cylindrique, qui permet un passage de fluide de pression entre les deux faces de l'élément de fermeture, cependant que la surface extérieure du segment de guidage est dotée d'au moins une rainure hélicoïdale menant de l'une des faces du segment de guidage vers l'autre face, **caractérisé en ce que** le pas hélicoïdal de la rainure (23, 24) hélicoïdale est choisi de façon telle, que le début et la fin de chaque rainure sont situés sur une ligne, qui est orientée dans la direction de l'axe (32) médian du cône (30) de valve.

2. Un élément de fermeture selon la revendication n° 1, **caractérisé en ce que** le segment (16) de guidage est pourvu de deux rainures (23, 24), qui sont décalées de 180° l'une par rapport à l'autre.

3. Un élément de fermeture selon la revendication n° 1, **caractérisé en ce que** le segment (16) de guidage est pourvu de n rainures, qui sont décalées de 360°/n les unes par rapport aux autres, cependant que n est un nombre entier, qui est supérieur à deux.

4. Un élément de fermeture selon une des revendications précédentes, **caractérisé en ce que** le segment (16) de guidage est pourvu d'une interruption (16c).

5. Un élément de fermeture selon la revendication n° 4, **caractérisé en ce que** l'interruption (16c) du segment (16) de guidage est conçue comme une sorte de rainure (41) annulaire.

6. Un élément de fermeture selon une des revendications précédentes, **caractérisé en ce que** l'élément (10; 30; 40) de fermeture, sur sa face (10b; 30b; 40b) orientée vers le segment (16) de guidage, est doté d'un épaulement (21) en forme de pivot.

7. La fabrication d'un élément de fermeture selon une des revendications précédentes par les étapes suivantes :
- fabrication du segment d'étanchéité et du segment de guidage ainsi que, le cas échéant, de l'interruption du segment de guidage et de l'épaulement en forme de pivot par tournage de rond avec surépaisseur pour meulage,
- fabrication des rainures hélicoïdales par fraisage circulaire,
- trempage,
- rectification sans pointe.

8. La disposition d'un élément de fermeture selon une des revendications précédentes dans un alésage (11) de guidage dans le corps (12) d'une valve de pression à réglage progressif.
